# FASCICULE DE BREVET EUROPEEN

(11) **EP 1 964 698 B1**
(45) Date de publication et mention de la délivrance du brevet: **17.08.2011**
(21) Numéro de dépôt: 08101396.3
(22) Date de dépôt: 07.02.2008
(51) Int. Cl.: B60J 1/16, B60J 5/00

(54) **Portière pour véhicule automobile, procédé de fabrication, véhicule et partie supérieure correspondants**
Fahrzeugtür, Fahrzeugtürfertigungsverfahren, Fahrzeug mit einer solchen Tür, und entsprechendes Fahrzeugtüroberteil
Vehice door, vehicle door manufacturing method, vehicle with such a door, and corresponding vehicle door upper part

(30) Priorité: 07.02.2007 FR 0700872
(43) Date de publication de la demande: 03.09.2008
(73) Titulaire: Advanced Comfort Systems France SAS - ACS France, 79300 Bressuire (FR)
(72) Inventeur: Neaux, Jean-Claude, 79300 Ternes (FR); Tarzaim, Karim, 85200 Fontenay-le-Comte (FR)
(74) Mandataire: Bioret, Ludovic

(56) Documents cités:
- DE-A1- 4 140 574
- DE-A1- 19 860 554
- FR-A- 2 854 350

## Description

### 1. Domaine de l'invention

Le domaine de l'invention est celui des véhicules automobiles. Plus précisément, l'invention concerne les portières pour ces véhicules automobiles, présentant une partie vitrée équipée d'une portion ouvrante.

### 2 Solutions et inconvénients de l'art antérieur

Classiquement, une portière de véhicule automobile présente une partie inférieure pleine, et une partie supérieure vitrée. Généralement, la partie vitrée est définie par un cadre supérieur, dans lequel une vitre vient se loger. Ce cadre est formé dans la structure de la portière.

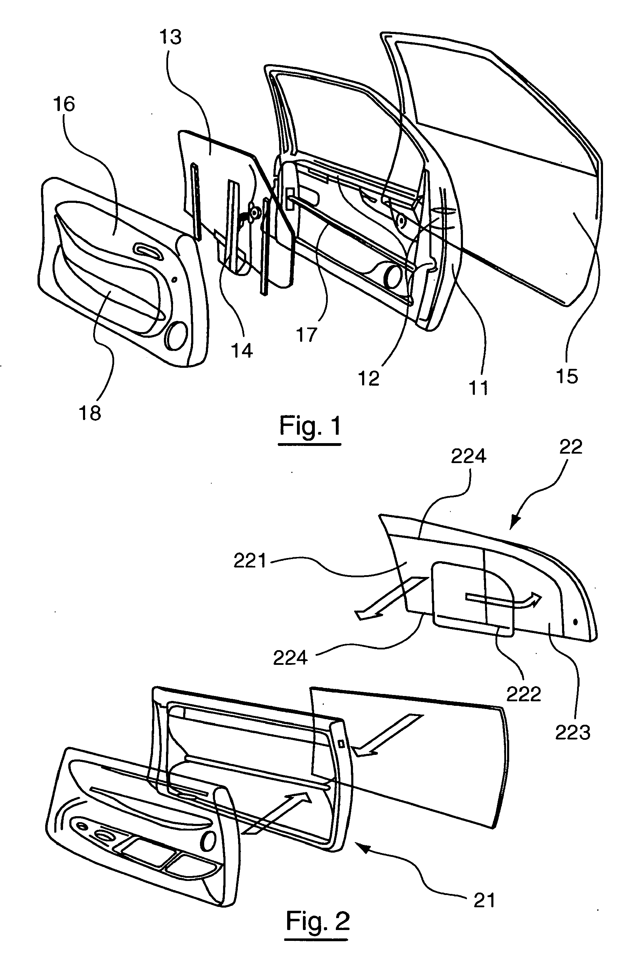

Un exemple de portière de ce type, qui correspond à la plupart des portières actuellement installées sur des véhicules, est illustré en figure 1. Une telle portière présente un élément de structure 11, à l'intérieur duquel sont montés les moyens 12 d'ouverture et de verrouillage de la portière, ainsi qu'une vitre 13 et le mécanisme 14 permettant son coulissement, dans une fente prévue à cet effet, ménagée dans la partie inférieure de la portière.

On rapporte ensuite un panneau de carrosserie extérieur 15, et un garnissage intérieur 16.

Les portières de ce type présentent de nombreux inconvénients. Elles supposent un nombre important de composants à assembler, et leur assemblage est long et délicat à mettre en oeuvre, en particulier en ce qui concerne la vitre coulissante 13, qui doit être mis en place très précisément.

L'équipement permettant le déplacement de la vitre 13, qu'il s'agisse d'un mécanisme manuel ou électrique, est complexe, lourd et encombrant. Le document DE-A_198 60 554 décrit un tel mécanisme de guidage d'une vitre de portière de ce type. Un autre exemple de mécanisme, de type lève-vitre, est décrit dans le document DE-A-4140 574.

De plus, le fait que la vitre puisse prendre place à l'intérieur de la partie inférieure de la portière pose divers problèmes, tant sur le plan de la sécurité (positionnement et dimensionnement des renforts latéraux 17), que de l'esthétique ou de l'ergonomie (dimensionnement des rangements 18).

Une autre technique a été présentée notamment dans le document de brevet FR- 2 788 731. Comme illustré en figure 2, elle consiste à réaliser une portière en deux parties montées indépendamment l'une de l'autre :
- une partie inférieure 21, ne présentant aucun moyen de guidage d'une vitre mobile, et
- une partie supérieure 22, présentant une baie 221, qui peut être équipée d'un panneau mobile 222 pouvant obturer ou libérer une ouverture 223.

Les parties inférieure et supérieure sont ensuite solidarisées l'une à l'autre au niveau d'une zone d'assemblage de ladite portière, s'étendant sensiblement horizontalement et correspondant au dessus de ladite partie inférieure et au dessous de ladite partie supérieure.

La partie supérieure présente donc une fenêtre (vitre), en verre ou en un matériau similaire, définissant une baie. Le système d'ouverture est réalisé dans la partie supérieure, indépendamment de la partie inférieure. Il s'agit avantageusement d'une baie "flush", telle que développée par le Déposant de la présente demande de brevet, et décrite par exemple dans la demande de brevet EP - 0 778 168.

Cette approche est intéressante, en termes de simplicité de fabrication, de design, de poids... Cependant, elle présente l'inconvénient que l'ouverture 223 est de taille limitée, et que la présence de moyens de guidage 224 du panneau mobile 222, solidarisés à la baie 221 doivent être dissimulés, par exemple par de la sérigraphie. Cette sérigraphie réduit fortement le clair de baie (partie transparente), ce qui va à l'encontre des attentes actuelles des constructeurs et des utilisateurs, qui souhaitent disposer de la surface vitrée la plus importante possible.

### 3. Objectifs de l'invention

L'invention a notamment pour objectif de pallier ces différents inconvénients de la technique antérieure.

Plus précisément, un objectif de l'invention est de fournir un nouveau type de portière, et un procédé de fabrication d'une portière pour véhicule automobile, qui soit plus simple et plus rapide à mettre en oeuvre que les procédés de fabrication connus.

Un autre objectif de l'invention est de fournir une portière, et le procédé de fabrication correspondant, qui présente un nombre de composants et un poids réduit, par rapport aux techniques connues.

L'invention a également pour objectif de fournir une telle portière, présentant les avantages d'une baie « flush », par exemple en termes de simplicité et de design, tout en offrant un clair de baie améliorée.

Encore un autre objectif de l'invention est de fournir un procédé de fabrication qui permette de réaliser des portières présentant des caractéristiques nouvelles, notamment en ce qui concerne l'esthétique et l'ergonomie

### 4. Exposé de l'invention

Ces objectifs, ainsi que d'autres qui apparaîtront plus clairement par la suite, sont atteints à l'aide d'une portière de véhicule automobile, comprenant une partie inférieure, ou caisson de portière, et une partie supérieure vitrée, ou baie, ladite baie comprenant un ensemble fixe vitré dans lequel est définie au moins une ouverture, et au moins un panneau mobile vitré associé à la ou à une desdites ouvertures, ledit panneau mobile vitré étant monté coulissant sur deux rails de guidage solidarisés audit ensemble fixe vitré, entre une position d'obturation dans laquelle ledit panneau mobile vitré obture ladite ouverture et au moins une position d'ouverture, dans laquelle ladite ouverture est au moins partiellement libérée.

Selon l'invention, au moins une première portion d'un premier desdits rails se trouve à l'intérieur de ladite partie inférieure.

Ainsi, au moins une portion de rail pénétrant dans la partie inférieure de la portière, le clair de jour est augmenté, en particulier au niveau inférieur de la baie. D'autre part, la mise en oeuvre du guidage du panneau est simplifiée.

Selon un mode de réalisation avantageux de l'invention, ledit ensemble fixe vitré pénètre partiellement dans ladite partie inférieure.

Ainsi, il est possible de faire coïncider, ou au moins d'approcher, le bord inférieur de l'ouverture dans l'ensemble fixe avec le contour supérieur du caisson.

Dans au moins un mode de réalisation particulier de l'invention, une portion inférieure de ladite ouverture se trouve à l'intérieur de ladite partie inférieure.

Ainsi, on augmente la surface de l'ouverture dans la baie.

Selon un aspect particulier de l'invention, lesdits rails sont sensiblement parallèles.

Il peut également être envisagé, dans au moins un autre mode de réalisation particulier de l'invention, de mettre en oeuvre des rails non parallèles et de prévoir des moyens de compensation de l'écartement des rails pour faciliter le guidage du panneau mobile.

Avantageusement, lesdits rails sont galbés.

Ainsi, le clair de jour peut être augmenté en faisant épouser à au moins un des rails la forme d'un élément de carrosserie de la portière.

De façon préférée, une deuxième portion dudit premier rail est désolidarisée et éloignée dudit ensemble fixe vitré.

Ainsi, au moins une portion du contour inférieur de l'ensemble fixe peut être définie et/ou profilée sans tenir compte du premier rail. Il convient d'autre part de noter que la première et la deuxième portion de rail peuvent se confondre partiellement ou en totalité.

Préférentiellement, ledit premier rail est solidarisé audit caisson.

Ainsi, le guidage du panneau mobile est rendu plus fiable lors du coulissement, notamment en termes de stabilité de fonctionnement vis-à-vis des effets des vibrations (battement du panneau, ...) et d'usure.

De façon avantageuse, une telle portière comprend des moyens d'occultation d'une fente dans ledit caisson, apparaissant lorsque ledit panneau mobile est dans une position d'ouverture.

Ainsi, on évite que des éléments pollueurs (projetés sur la portière de l'extérieur lors du déplacement du véhicule ou introduits par les occupants du véhicule, et notamment de jeunes enfants) ne pénètrent à l'intérieur du caisson et puisse être à l'origine de nuisances sonores et ou de dysfonctionnements dans le guidage et/ou l'entraînement du panneau mobile.

Selon un mode de réalisation particulièrement avantageux de l'invention, lesdits moyens d'occultation comprennent un élément d'occultation entraîné au-dessus de ladite fente par ledit panneau mobile lors de son coulissement.

Ainsi, l'occultation de la fente est synchronisée simplement avec l'ouverture de la baie.

De façon préférée, ledit élément d'occultation est une toile d'un store à enrouleur.

Toutefois, il peut également être envisagé qu'un tel élément d'occultation soit constitué d'un élément plus rigide (panneau, lame, ...) se découvrant et/ou s'extrayant lors du mouvement du panneau mobile, par exemple en coulissant dans un logement prévu dans le cadre du panneau mobile, ou d'un lèvre de joint flexible.

L'invention concerne également un procédé de fabrication d'une portière telles que décrites ci-dessus, comprenant les étapes suivantes :
- obtention d'une partie inférieure de portière, ou caisson ;
- obtention d'une partie supérieure de portière, ou baie,
   ladite baie comprenant un ensemble fixe vitré dans lequel est définie au moins une ouverture, et au moins un panneau mobile vitré associé à la ou à une desdites ouvertures,
   ledit panneau mobile étant monté coulissant sur deux rails de guidage solidarisés audit ensemble fixe vitré, entre une position d'obturation dans laquelle ledit panneau mobile vitré obture ladite ouverture et au moins une position d'ouverture, dans laquelle ladite ouverture est au moins partiellement libérée ;
- assemblage desdites parties inférieure et supérieure, de façon qu'au moins une première portion d'un premier desdits rails se trouve à l'intérieur de ladite partie inférieure ;
- solidarisation desdites parties inférieure et supérieure.

Ainsi, le montage et l'assemblage de la portière peut être réalisé en seulement quatre étapes.

Selon un mode de réalisation particulier de l'invention, un tel procédé comprend par ailleurs une étape d'insertion partielle de ladite partie supérieure dans ladite partie inférieure.

Un procédé parmi ceux décrits ci-dessus peut en outre comprendre une étape de solidarisation d'un desdits rails audit caisson.

L'invention concerne encore un véhicule automobile équipé d'au moins une des portières décrites ci-dessus.

L'invention concerne également une partie supérieure vitrée, ou baie, d'une portière de véhicule automobile, comprenant une partie inférieure, ou caisson de portière, et ladite partie supérieure vitrée, ladite baie comprenant un ensemble fixe vitré dans lequel est définie au moins une ouverture, et au moins un panneau mobile vitré associé à la ou à une desdites ouvertures, ledit panneau mobile vitré étant monté coulissant sur deux rails de guidage solidarisés audit ensemble fixe vitré, entre une position d'obturation dans laquelle ledit panneau mobile vitré obture ladite ouverture et au moins une position d'ouverture, dans laquelle ladite ouverture est au moins partiellement libérée, au moins une première portion d'un premier desdits rails étant configurée de façon à pénétrer à l'intérieur de ladite partie inférieure.

L'invention concerne encore une telle partie supérieure vitrée dont une deuxième portion dudit premier rail est désolidarisée et éloignée dudit ensemble fixe.

### 5. Liste des figures

D'autres caractéristiques et avantages de l'invention apparaîtront à la lecture de la description suivante d'un mode de réalisation préférentiel de l'invention, donné à titre de simple exemple illustratif et non limitatif et des dessins annexés, parmi lesquels :
- la figure 1 déjà commentée en préambule, illustre, en éclaté, une portière de type connu ;
- la figure 2 également commentée en préambule, illustre, en éclaté, un second type de portière connu ;
- les figures 3A et 3B présentent une portière selon l'invention respectivement en position d'obturation et en position d'ouverture ;
- la figure 4 est une vue de détail du store se déployant sur la partie centrale de la portière présentée en figures 3A et 3B ;
- la figure 5 est un schéma synoptique simplifié du procédé de fabrication d'une portière telle qu'illustrée en figures 3A et 3B.

### 6. Description détaillée

### 6.1. Rappel du principe de l'invention

Comme mentionné ci-dessus, le principe général de l'invention repose sur une nouvelle approche des baies dites « baies flush », développées par le Demandeur, prévoyant la mise en oeuvre d'un rail de guidage d'un panneau mobile coulissant dont au moins une portion pénètre dans la partie inférieure de la portière, afin notamment d'augmenter le clair de jour, en particulier au niveau inférieur de la baie.

Une portière selon l'invention comprend donc un ensemble vitré fixe, comprenant une portion fixe vitrée, présentant une ouverture pouvant être libérée ou obturée par un panneau mobile, également vitré. Ce panneau vitré est guidé par deux rails solidarisés à la partie fixe, selon une direction sensiblement horizontale. Le panneau mobile se déplace parallèlement à une portion de la partie fixe.

Il est à noter que l'ouverture ne partage aucun bord commun avec l'ensemble fixe, c'est-à-dire que les bords de l'ensemble fixe sont matérialisés et susceptibles d'être rapportés par exemple par collage à la carrosserie.

Le terme « vitré » signifie réalisé entièrement ou en grande partie en verre ou dans un matériau organique transparent ou translucide, par exemple en polycarbonate. Une portion de ces panneaux et portions vitrés peut bien sûr être non transparente, et par exemple recouverte de sérigraphie.

Selon l'invention, une portion d'un des rails pénètre à l'intérieur de la partie inférieure de façon à augmenter la plage de déplacement du panneau mobile, et en conséquence le clair de baie (généralement fortement réduit par la sérigraphie dissimulant les rails solidarisés à l'ensemble fixe).

Ceci permet également au moins dans certains modes de réalisation d'augmenter l'écartement entre les rails et en conséquence une dimension du panneau mobile, et donc de l'ouverture.

L'invention propose par ailleurs, pour au moins un mode de réalisation particulier, une approche nouvelle de la fabrication de portières équipées de ces baies, en prévoyant d'en insérer une portion à l'intérieur du caisson de portière.

### 6.2. Description d'un mode de réalisation particulier de l'invention

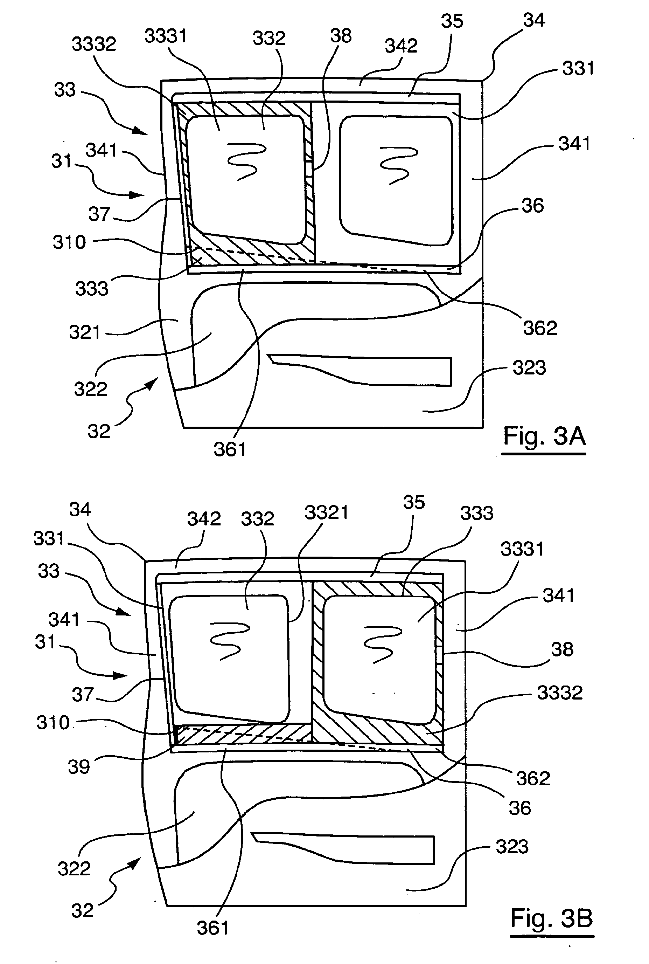

En référence aux figures 3A et 3B, on présente un mode de réalisation d'une portière 31 selon l'invention.

Cette portière 31 comprend une partie inférieure, également appelée caisson de portière 32, et une partie supérieure, également appelée baie 33, et délimitée, dans ce mode de réalisation, par deux montants 341 et une traverse 342 d'un cadre 34.

Le caisson 32 comprend trois composants principaux : un élément de structure 321, qui reçoit d'une part un panneau de carrosserie extérieur 322 et un garnissage intérieur 323.

La baie est obturée par un ensemble vitré fixe 331 (en verre minéral ou organique, en matière plastique ou en matériau transparent similaire) percé d'une ouverture 332. Le contour de cet ensemble fixe 331 est solidarisé, par exemple par collage (et/ou tout autre moyen adapté, tel que le soudage, le vissage, le rivetage...) au cadre 34 et au caisson 32, ce qui permet d'obtenir un aspect affleurant, esthétique et aérodynamique, notamment du fait de l'absence d'un cadre externe apparent.

Comme illustré sur la figure 3A en position d'obturation, l'ouverture 332 reçoit un panneau mobile 333 coulissant représenté avec des hachures inclinées vers la gauche, comprenant une vitre, par exemple en verre (ou tout autre matériau adapté), 3331 munie d'un cadre 3332, venant dans le plan de l'ouverture de façon que dans cette position la baie apparaissent comme une portion de la carrosserie, sans rupture visuelle.

Une fois dégagé du plan de l'ouverture, par exemple selon un mouvement de louvoiement décrite notamment dans le document EP 0 857 844, au nom du même Déposant que la présente demande de brevet, ou selon deux mouvements perpendiculaires successifs (décalage puis coulissement), ce panneau 333 peut coulisser, selon une direction sensiblement horizontale et dans un plan sensiblement parallèle au plan de l'ensemble fixe, jusqu'à une position de libération complète de l'ouverture, encore appelée position d'ouverture maximale, illustrée à la figure 3B.

Il convient de noter que la surface de l'ensemble fixe et du panneau mobile peut être incurvée, en particulier pour suivre les lignes et la forme de la carrosserie de la portière et plus généralement du véhicule.

Lors de ce coulissement, le panneau 333 est guidé entre deux rails parallèles 35 et 36 montés en partie inférieure et en partie supérieure de l'ensemble fixe. Dans d'autres modes de réalisation, les rails peuvent ne pas être parallèles, des moyens de compensation étant alors prévus.

Des moyens d'articulation du panneau par rapport aux rails peuvent être prévus pour que dans son déplacement le panneau 333 puisse épouser au plus près la surface incurvée de l'ensemble fixe. Une butée d'inviolabilité 37, visant à réduire les risques d'effraction par forçage du panneau coulissant est par ailleurs disposée verticalement à l'extrémité des rails 35 et 36.

Dans ce mode de réalisation, le rail supérieur 35 est rapporté sur la face de l'ensemble fixe correspondant à l'intérieur de la portière, sensiblement sur toute sa longueur. En revanche, seule une portion 362 du rail inférieur 36, encore appelé premier rail, est rapportée sur cette face de l'ensemble fixe. Une première portion 361 du rail est désolidarisée et éloignée de l'ensemble 32 (dans ce mode de réalisation de l'invention, on désigne de ce fait également la portion 361 par « deuxième portion de rail »), et pénètre à l'intérieur du caisson sensiblement à l'aplomb du bord 3321 de l'ouverture 332.

Avantageusement, le rail 35 et/ou la portion du rail 362 supportant le panneau mobile s'étendent jusqu'aux montants 341, et sont solidarisés à ces derniers. Selon une autre approche, ils (ou au moins le rail supérieur) portent des tés de solidarisation, s'étendant perpendiculairement aux rails, destinés à être solidarisés au cadre. Ainsi, en cas de bris accidentel de l'ensemble fixe, le panneau mobile reste sensiblement en place, retenu par le rail, et ne risque pas de blesser les occupants du véhicule.

Par ailleurs, la première (respectivement deuxième) portion de rail 361 est avantageusement solidarisée au caisson, par exemple par soudure, notamment afin de limiter le débattement du panneau mobile lors de son coulissement du fait d'une portion 361 en porte-à-faux.

Le rail de guidage supérieur 35 et/ou le rail inférieur 36, sont par ailleurs avantageusement galbés de façon à épouser le profil de la traverse 342 et ainsi limiter la surface intérieure ou extérieure de l'ensemble fixe qu'il est nécessaire d'opacifier ou de couvrir d'un cache pour les masquer.

Le verrouillage ou le déverrouillage du panneau 333 sont mis en oeuvre en actionnant une poignée 38 de commande agissant sur des pênes collaborant avec des gâches formés dans les rails, ou respectivement en relâchant la poignée. Pour sécuriser le fonctionnement de la poignée 38, un bouton de blocage (non représenté) permet d'empêcher son actionnement.

Dans des variantes de ce mode de réalisation, d'autres moyens classiques de verrouillage du panneau mobile peuvent être envisagés sans sortir du cadre de l'invention.

Dans un mode de réalisation particulier, le déplacement du panneau mobile peut être motorisé. On peut notamment mettre en oeuvre une courroie d'entraînement, un câble ou une vis sans fin actionné(e) par un moto-réducteur. Une commande déportée (non représenté) logée par exemple dans la garniture du caisson de portière, permet de contrôler le mouvement du panneau.

Afin de masquer la fente 310 du caisson dégagée par le coulissement du panneau lors de l'ouverture de la baie, on prévoit des moyens d'occultation, qui peuvent notamment être entraînés par le panneau mobile. Selon une approche particulière, ces moyens d'occultation comprennent un rideau, ou toile, de store 39 (représenté avec des hachures inclinées vers la droite) de largeur réduite dont la barre de tirage est fixée au cadre 3332 du panneau 333. Le rideau 39 est déployé ou respectivement replié au-dessus de la fente, en étant entraîné par la baie.

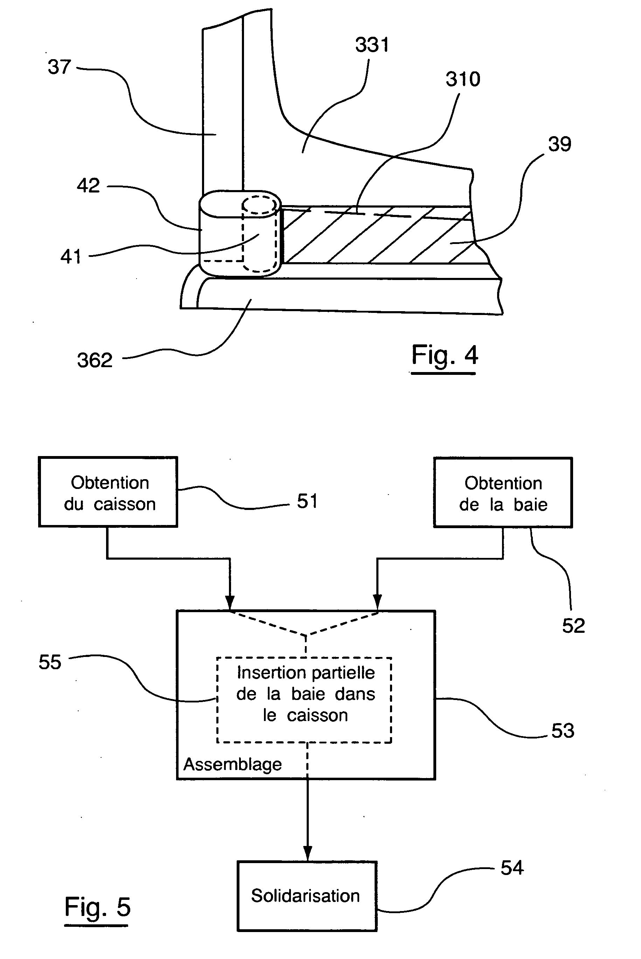

Comme illustré par la figure 4 dans une vue de détail de la partie centrale de la portière présentée à la figure 3B, cet élément d'occultation 39 est prévu pour se dérouler ou inversement s'enrouler autour d'un tube à enrouleur 41, fixé à l'extrémité de la première portion de rail 361 et couvert d'un cache 42.

On notera que la fabrication d'une telle portière reste simple. Il convient en effet de rappeler que la baie et le caisson sont indépendants et autonomes, et simplement solidarisés l'un à l'autre de façon fixe et définitive, à la fin de la fabrication, après avoir procédé à leur positionnement relatif.

La figure 5 résume ce procédé de fabrication.

Comme déjà mentionné, la fabrication d'une portière selon l'invention comprend quatre étapes principales :
- obtention, par exemple par assemblage et montage, du caisson ;
- obtention, par exemple par assemblage et montage, de la baie ;
- assemblage du caisson avec la baie en positionnant la première portion 361 du rail 36 à l'intérieur du caisson ;
- solidarisation du caisson et de la baie, par exemple par collage.

L'obtention 51 de la partie inférieure peut également comprendre notamment la réception de l'élément de structure 321, puis du garnissage intérieur 322 et du panneau de carrosserie extérieur 323.

Cette partie inférieure est donc plus simple à réaliser que les caissons classiques, puisqu'il n'est pas nécessaire de prévoir de moyens pour recevoir, guider et régler une vitre coulissante. Elle est également moins lourde, moins encombrante (ce qui permet d'améliorer la largeur utile à l'intérieur du véhicule), et plus facile à construire et à renforcer (insertion d'une traverse de renfort) ou à équiper (vide-poches par exemple).

Réalisée indépendamment, l'obtention 52 de la partie supérieure comprend notamment la réception de l'ensemble fixe 331 de la baie, le montage des rails 35 et 36 (à moins que ceux-ci aient été réalisés directement dans la masse de l'ensemble fixe), et la mise en place du panneau mobile 333, et des moyens de verrouillage (poignée 38, ...) et d'étanchéité adaptés. Le tout est ensuite mis en place sur le cadre 34. Les moyens d'occultation et de motorisation éventuels sont également rapportés, de façon que la partie supérieure puisse être fournie sous la forme d'un tout autonome.

La partie supérieure est ensuite présentée de façon à procéder au positionnement de la première portion 361 du rail 36, dans une position prédéterminée à l'intérieur du caisson et au maintien des parties supérieure et inférieure dans leur position relative, puis à l'assemblage 53 de ces deux parties.

Enfin, la solidarisation 54 de la base du cadre 34 et du dessus de la partie inférieure est effectuée, par exemple par collage, vissage, rivetage, soudage....

De façon préférentielle, le positionnement et/ou la solidarisation sont simplifiés en prévoyant des moyens d'aide à la mise en place des deux parties l'une par rapport à l'autre (guidage et/ou de maintien temporaire), telle qu'une rainure sur la partie inférieure, prévue pour recevoir la partie supérieure (la colle et/ou un joint ayant été éventuellement placés dans ladite rainure).

D'autre part dans le procédé de fabrication particulier illustré par la figure 5, la deuxième (respectivement première) portion de rail 361 est solidarisée au caisson 32 par exemple par soudure.

Avant de positionner la première portion de rail 361 à l'intérieur du caisson, on peut présenter la baie pour permettre l'insertion partielle 55 de la partie supérieure dans la partie inférieure de façon qu'une portion inférieure de l'ouverture 332 se trouve à l'intérieur du caisson 32.

### 6.3. Autres caractéristiques optionnelles et avantages

Dans d'autres modes de réalisation particuliers de l'invention, il peut être notamment prévu que :
- un logement et un accoudoir ménagés dans le garnissage 323 pénètrent au moins partiellement à l'intérieur du volume défini par l'élément de structure 321 (et non réservé au passage d'une vitre coulissante) ;
- des éléments de renfort latéraux occupent la surface de la partie inférieure de la portière ;
- l'ensemble fixe est réalisé en une ou plusieurs parties, en tout matériau adéquat. Il peut être partiellement translucide, et intégré dès sa fabrication les rails de guidage de la partie mobile ;
- les rails ne sont pas parallèles ;
- le cadre ne s'étend pas sur la totalité du périmètre de la partie supérieure (et est par exemple limité à des montants latéraux) ;
- des moyens d'occultation (notamment un store à enrouleur) sont prévus pour occulter tout ou partie de la partie vitrée.

## Revendications

1. Portière (31) de véhicule automobile, comprenant une partie inférieure (32), ou caisson de portière, et une partie supérieure vitrée (33), ou baie,
ladite baie comprenant un ensemble fixe vitré (331) dans lequel est définie au moins une ouverture (332), et au moins un panneau mobile vitré (333) associé à la ou à une desdites ouvertures,
ledit panneau mobile vitré (333) étant monté coulissant sur deux rails de guidage (35; 36) solidarisés audit ensemble fixe vitré (331), entre une position d'obturation dans laquelle ledit panneau mobile vitré (333) obture ladite ouverture et au moins une position d'ouverture, dans laquelle ladite ouverture (332) est au moins partiellement libérée,
**caractérisée en ce qu'**au moins une première portion (361) d'un premier desdits rails (35; 36) se trouve à l'intérieur de ladite partie inférieure (32).

2. Portière selon la revendication 1, **caractérisé en ce que** ledit ensemble fixe vitré (331) pénètre partiellement dans ladite partie inférieure (32).

3. Portière selon la revendication 2, **caractérisé en ce qu'**une portion inférieure de ladite ouverture (332) se trouve à l'intérieur de ladite partie inférieure (32).

4. Portière selon l'une quelconque des revendications 1 à 3, **caractérisée en ce que** lesdits rails (35; 36) sont sensiblement parallèles.

5. Portière selon l'une quelconque des revendications 1 à 4, **caractérisée en ce que** lesdits rails (35; 36) sont galbés.

6. Portière selon l'une quelconque des revendications 1 à 5, **caractérisée en ce qu'**une deuxième portion (361) dudit premier rail (36) est désolidarisée et éloignée dudit ensemble fixe vitré (331).

7. Portière selon l'une quelconque des revendications 1 à 6, **caractérisée en ce que** ledit premier rail (36) est solidarisé audit caisson (32).

8. Portière selon l'une quelconque des revendications 1 à 7, **caractérisée en ce qu'**il comprend des moyens d'occultation d'une fente (310) dans ledit caisson (32), apparaissant lorsque ledit panneau mobile vitré (333) est dans une position d'ouverture.

9. Portière selon la revendication 8, **caractérisé en ce que** lesdits moyens d'occultation comprennent un élément d'occultation (39) entraîné au-dessus de ladite fente (310) par ledit panneau mobile vitré (333) lors de son coulissement.

10. Portière selon la revendication 9, **caractérisée en ce que** ledit élément d'occultation (39) est une toile d'un store à enrouleur.

11. Procédé de fabrication d'une portière selon l'une quelconque des revendications 1 à 10, **caractérisé en ce qu'**il comprend les étapes suivantes :
- obtention d'une partie inférieure de portière, ou caisson (32) ;
- obtention d'une partie supérieure de portière, ou baie (33),
ladite baie (33) comprenant un ensemble fixe vitré (331) dans lequel est définie au moins une ouverture (332), et au moins un panneau mobile vitré (333) associé à la ou à une desdites ouvertures,
ledit panneau mobile vitré (333) étant monté coulissant sur deux rails de guidage (35; 36) solidarisés audit ensemble fixe vitré, entre une position d'obturation dans laquelle ledit panneau mobile vitré obture ladite ouverture et au moins une position d'ouverture, dans laquelle ladite ouverture est au moins partiellement libérée ;
- assemblage desdites parties inférieure (32) et supérieure (33), de façon qu'au moins une première portion (361) d'un premier desdits rails (35; 36) se trouve à l'intérieur de ladite partie inférieure (32) ;
- solidarisation desdites parties inférieure (32) et supérieure (33).

12. Procédé de fabrication d'une portière selon la revendication 11, **caractérisé en ce qu'**il comprend une étape d'insertion partielle de ladite partie supérieure (33) dans ladite partie inférieure (32).

13. Procédé de fabrication d'une portière selon l'une quelconque des revendications 11 et 12, **caractérisé en ce qu'**il comprend en outre une étape de solidarisation d'un desdits rails (35; 36) audit caisson (32).

14. Véhicule automobile comprenant au moins une portière (31) comprenant une partie inférieure (32), ou caisson de portière, et une partie supérieure vitrée (33), ou baie,
ladite baie (33) comprenant un ensemble fixe vitré (331) dans lequel est définie au moins une ouverture (332), et au moins un panneau mobile vitré (333) associé à la ou à une desdites ouvertures,
ledit panneau mobile vitré (333) étant monté coulissant sur deux rails de guidage (35; 36) solidarisés audit ensemble fixe vitré (331), entre une position d'obturation dans laquelle ledit panneau mobile vitré obture ladite ouverture et au moins une position d'ouverture, dans laquelle ladite ouverture est au moins partiellement libérée,
**caractérisé en ce qu'**au moins une première portion (361) d'un premier desdits rails (35; 36) se trouve à l'intérieur de ladite partie inférieure (32).

15. Partie supérieure vitrée (33), ou baie, d'une portière (31) de véhicule automobile, comprenant une partie inférieure (32), ou caisson de portière, et ladite partie supérieure vitrée (33),
ladite baie (33) comprenant un ensemble fixe vitré (331) dans lequel est définie au moins une ouverture (332), et au moins un panneau mobile vitré (333) associé à la ou à une desdites ouvertures,
ledit panneau mobile (333) étant monté coulissant sur deux rails de guidage (35; 36) solidarisés audit ensemble fixe vitré (331), entre une position d'obturation dans laquelle ledit panneau mobile vitré obture ladite ouverture et au moins une position d'ouverture, dans laquelle ladite ouverture est au moins partiellement libérée,
**caractérisée en ce qu'**au moins une première portion (361) d'un premier desdits rails (35; 36) est configurée de façon à pénétrer à l'intérieur de ladite partie inférieure (32).

16. Partie supérieure vitrée selon la revendication 15, **caractérisée en ce qu'**une deuxième portion (361) dudit premier rail (36) est désolidarisée et éloignée dudit ensemble fixe vitré (331).

## Claims

1. Motor vehicle door (31) comprising a lower part (32) or door casing, and a glazed upper part (33) or opening, the said opening comprising a glazed fixed unit (331) in which at least one aperture (332) is defined, and at least one glazed movable panel (333) associated with the said aperture or with one of the said apertures;
the said glazed movable panel (333) being mounted so as to slide, on two guide rails (35; 36) fastened to the said glazed fixed unit (331), between an occluding position in which the said glazed movable panel (333) occludes the said aperture, and at least one opening position in which the said aperture (332) is at least partially unblocked;
**characterised in that** at least a first portion (361) of a first of the said rails (35; 36) is located inside the said lower part (32).

2. Door according to claim 1, **characterised in that** the said glazed fixed unit (331) partially penetrates into the said lower part (32).

3. Door according to claim 2, **characterised in that** a lower portion of the said aperture (332) is located inside the said lower part (32).

4. Door according to any of claims 1 to 3, **characterised in that** the said rails (35; 36) are substantially parallel.

5. Door according to any of claims 1 to 4, **characterised in that** the said rails (35; 36) are curved.

6. Door according to any of claims 1 to 5, **characterised in that** a second portion (361) of the said first rail (36) is unfastened and removed from the said glazed fixed unit (331).

7. Door according to any of claims 1 to 6, **characterised in that** the said first rail (36) is fastened to the said casing (32).

8. Door according to any of claims 1 to 7, **characterised in that** it comprises means for concealing a slot (310) in the said casing (32) which appears when the said glazed movable panel (333) is in an opening position.

9. Door according to claim 8, **characterised in that** the said concealing means comprise a concealing element (39) which is entrained above the said slot (310) by the said glazed movable panel (333) when it slides.

10. Door according to claim 9, **characterised in that** the said concealing element (39) is a cloth belonging to a roller blind.

11. Method of manufacturing a door according to any of claims 1 to 10, **characterised in that** said method comprises the following stages:
- the obtaining of a lower door part or casing (32);
- the obtaining of an upper door part or opening (33),
the said opening (33) comprising a glazed fixed unit (331) in which at least one aperture (332) is defined, and at least one glazed movable panel (333) associated with the said aperture or with one of the said apertures;
the said glazed movable panel (333) being mounted so as to slide, on two guide rails (35; 36) fastened to the said glazed fixed unit, between an occluding position in which the said glazed movable panel (333) occludes the said aperture, and at least one opening position in which the said aperture (332) is at least partially unblocked;
- the assembling of the said lower part (32) and upper part (33) in such a way that at least a first portion (361) of a first of the said rails (35; 36) is located inside the said lower part (32);
- the fastening-together of the said lower part (32) and upper part (33).

12. Method of manufacturing a door according to claim 11, **characterised in that** said method comprises a stage involving the partial insertion of the said upper part (33) in the said lower part (32).

13. Method of manufacturing a door according to either of claims 11 and 12, **characterised in that** said method also comprises a stage involving the fastening of one of the said rails (35; 36) to the said casing (32).

14. Motor vehicle comprising at least one door comprising a lower part (32) or door casing, and a glazed upper part (33) or opening;
the said opening (33) comprising a glazed fixed unit (331) in which at least one aperture (332) is defined, and at least one glazed movable panel (333) associated with the said aperture or with one of the said apertures;
the said glazed movable panel (333) being mounted so as to slide, on two guide rails (35; 36) fastened to the said glazed fixed unit (331), between an occluding position in which the said glazed movable panel occludes the said aperture, and at least one opening position in which the said aperture is at least partially unblocked;
**characterised in that** at least a first portion (361) of a first of the said rails (35; 36) is located inside the said lower part (32).

15. Glazed upper part (33) or opening of a motor vehicle door (31) comprising a lower part (32) or door casing, and the said glazed upper part (33);
the said opening (33) comprising a glazed fixed unit (331) in which at least one aperture (332) is defined, and at least one glazed movable panel (333) associated with the said aperture or with one of the said apertures;
the said movable panel (333) being mounted so as to slide, on two guide rails (35; 36) fastened to the said glazed fixed unit (331), between an occluding position in which the said glazed movable panel occludes the said aperture, and at least one opening position in which the said aperture is at least partially unblocked;
**characterised in that** at least a first portion (361) of a first of the said rails (35; 36) is configured in such a way as to penetrate inside the said lower part (32).

16. Glazed upper part according to claim 15, **characterised in that** a second portion (361) of the said first rail (36) is unfastened and removed from the said glazed fixed unit (331).

## Patentansprüche

1. Kraftfahrzeugtür (31), die einen unteren Teil (32) oder ein Türgestell, und einen oberen verglasten Teil (33) oder eine Öffnung aufweist, wobei die Öffnung eine stationäre verglaste Baugruppe (331) aufweist, in der mindestens eine Öffnung (332) definiert ist, und mindestens eine bewegliche verglaste Platte (333), die der oder einer der Öffnungen zugeordnet ist,
wobei die bewegliche verglaste Platte (333) auf zwei Führungsschienen (35; 36), die fest mit der stationären verglasten Baugruppe (331) verbunden sind, zwischen einer Verschlussposition, in der die bewegliche verglaste Platte (333) die Öffnung verschließt, und mindestens einer Öffnungsposition, in der die Öffnung (332) mindestens teilweise freigelegt wird, gleitend montiert ist, **dadurch gekennzeichnet, dass** sich mindestens ein erster Abschnitt (361) einer ersten der Schienen (35; 36) im Inneren des unteren Teils (32) befindet.

2. Tür nach Anspruch 1, **dadurch gekennzeichnet, dass** die stationäre verglaste Baugruppe (331) teilweise in den unteren Teil (32) eindringt.

3. Tür nach Anspruch 2, **dadurch gekennzeichnet, dass** sich ein unterer Abschnitt der Öffnung (332) im Inneren des unteren Teils (32) befindet.

4. Tür nach einem der Ansprüche 1 bis 3, **dadurch gekennzeichnet, dass** die Schienen (35; 36) im Wesentlichen parallel sind.

5. Tür nach einem der Ansprüche 1 bis 4, **dadurch gekennzeichnet, dass** die Schienen (35; 36) gewölbt sind.

6. Tür nach einem der Ansprüche 1 bis 5, **dadurch gekennzeichnet, dass** ein zweiter Abschnitt (361) der ersten Schiene (36) von der stationären verglasten Baugruppe (331) gelöst und beabstandet ist.

7. Tür nach einem der Ansprüche 1 bis 6, **dadurch gekennzeichnet, dass** die erste Schiene (36) mit dem Gestell (32) fest verbunden ist.

8. Tür nach einem der Ansprüche 1 bis 7, **dadurch gekennzeichnet, dass** sie Mittel zum Verdunkeln eines Schlitzes (310) in dem Gestell (32) aufweist, der erscheint, wenn sich die bewegliche verglaste Platte (333) in einer Öffnungsposition befindet.

9. Tür nach Anspruch 8, **dadurch gekennzeichnet, dass** die Verdunkelungsmittel ein Verdunkelungselement (39) aufweisen, das oberhalb des Schlitzes (310) von der beweglichen verglasten Platte (333) bei ihrem Gleiten angetrieben wird.

10. Tür nach Anspruch 9, **dadurch gekennzeichnet, dass** das Verdunkelungselement (39) ein Stoff eines Rollvorhangs ist.

11. Verfahren zum Herstellen einer Tür nach einem der Ansprüche 1 bis 10, **dadurch gekennzeichnet, dass** es die folgenden Schritte aufweist:
- Beschaffen eines unteren Türteils oder Türgestells (32);
- Beschaffen eines oberen Türteils oder Öffnung (33),
wobei die Öffnung (33) eine stationäre verglaste Baugruppe (331) aufweist, in der mindestens eine Öffnung (332) definiert ist, und mindestens eine bewegliche verglaste Platte (333), die der oder einer der Öffnungen zugeordnet ist,
wobei die bewegliche verglaste Platte (333) auf zwei Führungsschienen (35; 36), die fest mit der stationären verglasten Baugruppe verbunden sind, zwischen einer Verschlussposition, in der die bewegliche verglaste Platte die Öffnung verschließt, und mindestens einer Öffnungsposition, in der die Öffnung mindestens teilweise freigegeben ist, gleitend montiert ist;
- Zusammenfügen des unteren Teils (32) und oberen Teils (33) derart, dass mindestens ein erster Abschnitt (361) einer ersten der Schienen (35; 36) im Inneren des unteren Teils (32) liegt;
- festes Verbinden des unteren Teils (32) und des oberen Teils (33).

12. Verfahren zum Herstellen einer Tür nach Anspruch 11, **dadurch gekennzeichnet, dass** es einen Schritt des teilweisen Einfügens des oberen Teils (33) in den unteren Teil (32) umfasst.

13. Verfahren zum Herstellen einer Tür nach einem der Ansprüche 11 und 12, **dadurch gekennzeichnet, dass** es ferner einen Schritt des festen Verbindens einer der Schienen (35; 36) mit dem Gestell (32) aufweist.

14. Kraftfahrzeug, das mindestens eine Tür (31) aufweist, die einen unteren Teil (32) oder Türgestell und einen oberen verglasten Teil (33) oder Öffnung aufweist,
wobei die Öffnung (33) eine stationäre verglaste Baugruppe (331) aufweist, in der mindestens eine Öffnung (332) definiert ist, und mindestens eine bewegliche verglaste Platte (333), die der oder einer der Öffnungen zugeordnet ist, wobei die bewegliche verglaste Platte (333) auf zwei Führungsschienen (35; 36), die fest mit der stationären verglasten Baugruppe (331) verbunden sind, zwischen einer Verschlussposition, in der die bewegliche verglaste Platte die Öffnung verschließt, und mindestens einer Öffnungsposition, in der die Öffnung wenigstens teilweise freigegeben ist, gleitend montiert ist,
**dadurch gekennzeichnet, dass** mindestens ein erster Abschnitt (361) einer ersten der Schienen (35; 36) im Inneren des unteren Teils (32) liegt.

15. Verglaster oberer Teil (33) oder Öffnung einer Kraftfahrzeugtür (31), die einen unteren Teil (32) oder Türgestell und den verglasten oberen Teil (33) aufweist, wobei die Öffnung (33) eine stationäre verglaste Baugruppe (331) aufweist, in der mindestens eine Öffnung (332) definiert ist, und mindestens eine bewegliche verglaste Platte (333), die der oder einer der Öffnungen zugeordnet ist, wobei die bewegliche Platte (333) auf zwei Führungsschienen (35; 36), die mit der stationären verglasten Baugruppe (331) fest verbunden sind, zwischen einer Verschlussposition, in der die bewegliche verglaste Platte die Öffnung verschließt, und mindestens einer Öffnungsposition, in der die Öffnung mindestens teilweise freigegeben wird, gleitend montiert ist,
**dadurch gekennzeichnet, dass** mindestens ein erster Abschnitt (361) einer der Schienen (35; 36) derart konfiguriert ist, dass er in das Innere des unteren Teils (32) eindringt.

16. Verglaster oberer Teil nach Anspruch 15, **dadurch gekennzeichnet, dass** ein zweiter Abschnitt (361) der ersten Schiene (36) von der stationären verglasten Baugruppe (331) gelöst und beabstandet ist.
